# EUROPÄISCHE PATENTANMELDUNG

(11) **EP 3 000 983 A1**
(43) Veröffentlichungstag der Anmeldung: **30.03.2016**
(21) Anmeldenummer: 14186850.5
(22) Anmeldetag: 29.09.2014
(51) Int. Cl.: F01D 11/00, F01D 25/24, F16J 15/46

(54) **Dichtungsanordnung zum Abdichten eines Spalts zwischen zwei bei Raumtemperatur spaltseitig flächig aneinander liegender Bauteile sowie Verfahren zum Montieren und Demontieren einer solchen**

(71) Anmelder: Siemens Aktiengesellschaft, 80333 München (DE)
(72) Erfinder: Klein, Karl, 45138 Essen (DE); Sonnen, Stephan, 45289 Essen (DE); Vogel, Berthold, 74336 Brackenheim (DE)

(57) **Zusammenfassung**

Die Erfindung betrifft eine Dichtungsanordnung (11) zum Abdichten eines Spalts zwischen zwei spaltseitig flächig aneinander liegender Bauteile (13, 15), wobei jedes Bauteil (13, 15) in ihren spaltseitigen Flächen einander gegenüberliegende Nuten aufweisen, in denen ein den Spalt verschließendes Dichtelement (42) angeordnet ist. Um eine verbesserte Dichtungsanordnung (11) bereitzustellen, die einerseits eine weiterhin einfache Montage mittels einer transversalen Bewegung der beiden betreffenden Bauteile (13, 15) zueinander und andererseits trotz eines möglichen Auseinanderklaffens der beiden spaltseitigen Flächen (30, 32) der Bauteile (13, 15) weiterhin eine besonders zuverlässige Abdichtung des zwischen den beiden Spaltseiten (24) vorhandenen Spalts gewährleistet, ist vorgesehen, dass zumindest eine der beiden Nuten (35b) im Querschnitt betrachtet derartig in ihren Abmessungen dimensioniert ist, dass das Dichtelement (42) darin vollständig versenkbar ist und dass in deren Nutgrund (37) zumindest ein Montageloch (39) mündet, durch welches ein durch eine der Lochmündung gegenüberliegende Öffnung (40) einführbares Hilfsmittel zum Einschieben des Dichtelements in die andere der beiden Nuten (34) zuführbar ist.

## Beschreibung

Die Erfindung betrifft eine Dichtungsanordnung zum Abdichten eines Spalts zwischen zwei bei Raumtemperatur spaltseitig flächig aneinander liegender Bauteile, die jeweils in ihren spaltseitigen Flächen einander gegenüberliegende Nuten aufweisen, in denen ein den Spalt verschließendes Dichtelement angeordnet ist, wobei das Dichtelement in jeder Nut an den jeweils einander gegenüberliegenden Seitenwänden der Nut vorgespannt anliegt. Weiter betrifft die Erfindung ein Verfahren zum Montieren und Demontieren einer solchen.

Eine derartige Dichtungsanordnung ist insbesondere bei Gehäusen von thermischen Strömungsmaschinen bekannt. Thermische Strömungsmaschinen sind zumeist als stationäre Gasturbinen oder als Dampfturbinen mit einem eher vergleichsweise dickwandigen Gehäuse ausgestattet, um die im Inneren auftretenden hohen Drücke gegenüber der Umgebung abzuschirmen. Aufgrund der massiven Ausführung der Gehäuse und ihrer besonderen Größe ist es üblich, die Gehäuse mehrteilig auszugestalten und im Gießverfahren herzustellen. Die prinzipiell rohrförmigen Gehäuse sind in der Regel in einer so genannten horizontalen Teilfuge hälftig geteilt, so dass die betreffenden Gehäuse ein unteres Gehäuseteil sowie ein oberes Gehäuseteil aufweisen. Gleichzeitig weisen die Gehäuse eine derartige axiale Erstreckung auf, dass sie auch in dieser Richtung mehrteilig ausgestaltet sind: die Gehäuse sind dann an Axialfugen geteilt, die auch als vertikale Teilfugen bezeichnet werden. Die Bereiche, an denen sowohl die horizontale Teilfuge als auch die axiale Teilfuge aufeinander treffen, werden als Kreuzteilfuge bezeichnet.

Die einzelnen Gehäuseteile sind mit Flanschen ausgestattet, die an dem an jeweiligen Gehäuserand nach außen weisen und somit Raum bieten für Bohrungen, durch welche sich Dehnschrauben zur dauerhaften und zuverlässigen Verbindung unmittelbar benachbarter Gehäuseteile erstrecken.

Es hat sich jedoch herausgestellt, dass aufgrund der hohen Temperaturunterschiede zwischen Raumtemperatur und Betriebstemperatur die Gehäuseteile thermischen Dehnungen unterworfen sind, die insbesondere aufgrund der Anordnung der Flansche sowohl im zeitlichen Verhalten als auch in der Ausprägung innerhalb eines jeden Gehäuseteils lokal unterschiedlich sein können. Diese lokal unterschiedlichen Dehnungen können dazu führen, dass die Gehäuseteile an den Teilfugen geringfügig auseinander klaffen, obwohl diese durch die Vielzahl von den Dehnschrauben mit großer Kraft aneinander gepresst werden. Dies verschlechtert die Dichtigkeit der Teilfugen, so dass im schlimmsten Fall sogar geringe Leckagen nach außen auftreten können.

Gleichzeitig ist es beispielsweise aus der EP 0 852 659 B1 bekannt, in den Flanschflächen zweier aneinander liegender Gehäuseteile eine geriffelte Dichtung anzuordnen, um bei Auftreten von Klaffungen Leckagen aus dem Inneren des Gehäuses nach außen zu reduzieren.

Anstelle von den geriffelten Dichtungen der EP 0 852 659 B1 können auch so genannte C-Dichtungen oder E-Dichtungen verwendet werden, die in nur einer Nut sitzend an einer gegenüberliegenden Flanschfläche anliegen. Es hat jedoch gezeigt, dass selbst derartige Dichtungen keine ausreichende Rückspring-Kapazität aufweisen, um die tatsächlich auftretenden Spaltmaße zu schließen. Zudem sind derartige E-Dichtungen sehr teuer, aufwendig in der Montage und auch nur für den einmaligen Gebrauch bestimmt, so dass nach ihrer Verwendung und dem Öffnen eines damit ausgestatteten Gehäuses diese zu erneuern sind.

Weiterhin ist zu beachten, dass bei den eingangs genannten thermischen Strömungsmaschinen das Aufsetzen des letzten oberen Gehäuseteils auf eine untere Gehäusehälfte dieses während des Absenkens passgenau entlang einer Spaltfläche des benachbarten oberen Gehäuseteils vorbeibewegt werden muss, da eine Montagebewegung von der Seite her nicht möglich ist. In Bezug auf die vertikale Teilungsfuge besteht somit für das letzte zu montierende Gehäuseteil nicht die Möglichkeit, dieses axial, also von der Seite her, auf das andere obere Gehäuseteil hin zu bewegen. Diese montagebedingte Einschränkung lässt die Verwendung von gängigen Dichtsystemen mit den in der EP 0 852 659 B1 gezeigten, einander gegenüberliegenden Nuten und darin sitzenden Dichtungen an den betreffenden Stellen nicht zu.

Aufgabe der Erfindung ist daher die Bereitstellung einer Dichtungsanordnung zum Abdichten zweier spaltseitig flächig aneinander liegender Bauteile, die eine Montage ermöglichen, bei der eines der beiden Bauteile entlang des möglichen Leckagepfades bewegt wird.

Die der Erfindung zugrunde liegende Aufgabe wird mit einer Dichtungsanordnung gemäß dem Merkmal des Anspruchs 1 gelöst.

Bei einer Dichtungsanordnung zum Abdichten eines Spalts zwischen zwei bei Raumtemperatur spaltseitig flächig aneinander liegender Bauteile, die jeweils in ihren spaltseitigen Flächen einander gegenüberliegende Nuten aufweisen, in denen ein den Spalt verschließendes Dichtelement angeordnet ist, wobei das Dichtelement in jeder Nut an den jeweils einander gegenüberliegenden Seitenwänden der Nut anliegt, ist erfindungsgemäß vorgesehen, dass zumindest eine der beiden Nuten im Querschnitt betrachtet derartig in ihren Abmessungen dimensioniert ist, dass das Dichtelement darin vollständig versenkbar ist und dass in deren Nutgrund zumindest ein Montageloch mündet, durch welches ein durch eine der Lochmündung gegenüberliegende Öffnung einführbares Hilfsmittel zum Einschieben des Dichtelements in die andere der beiden Nuten zuführbar ist. Nachfolgend wird die eine der beiden Nuten, welche so groß ist, dass sie das Dichtelement vollständig aufnehmen kann, als größere Nut bezeichnet und die andere der beiden Nuten als die kleinere Nut.

Die vorgeschlagene Dichtungsanordnung ermöglicht es, zuerst die beiden Bauteile bereitzustellen und in der größeren Nut das Dichtelement vollständig darin zu versenken. Anschließend können beide Bauteile zueinander positioniert werden, wobei währenddessen sogar gleitender Kontakt der Spaltflächen entlang der selbigen möglich ist. Erst nach der endgültigen Positionierung beider Bauteile wird das Dichtelement nur teilweise aus der größeren Nut heraus in die kleiner Nut eingeschoben.

Insbesondere dieses Merkmal ermöglicht, dass trotz Vorhanden Sein eines Dichtelements die Spaltflächen der beiden Bauteile während ihres Zusammensetzens nicht aufeinander zu bewegt werden, was im Sinne dieser Anmeldung als Lateralbewegung der beiden Bauteile zueinander definiert wird. Anstelle dessen ist die relative Montagebewegung der beiden Bauteile parallel zu deren später aneinander liegenden Spaltflächen, was im Sinne dieser Anmeldung als Transversalbewegung der beiden Bauteile definiert wird. Die Dichtungsanordnung ist mithin insbesondere dann von Vorteil, wenn keine andere Montagebewegung als die Transversalbewegung möglich ist und dennoch eine zuverlässige Abdichtung des dazwischen angeordneten Spalts erforderlich ist.

Insbesondere in Kombination mit den spaltseitig angeordneten, vorzugsweise gekrümmten Nuten, ist es somit möglich, dass die Montage der Dichtungsanordnung in zwei Schritte unterteilt ist: a) die Positionierung der Bauteile zueinander und b) die Positionierung des Dichtelements. Dies verhindert reibenden Verschleiß am Dichtelement beim Zusammensetzen der Bauteile. Da die Anlagefläche für das Dichtelement nicht mit einer der beiden Spaltflächen, sondern mit den Seitenwänden der Nuten zusammenfällt und die Seitenwände der Nuten jedoch quer zur Spaltfläche orientiert ist, kann die Erstreckungstiefe des Dichtelements und der Nuten in die Bauteile hinein prinzipiell beliebig groß gewählt werden. Zweckmäßigerweise ist diese Erstreckung jedoch nur etwas größer gewählt als das maximal erwartete Spaltmaß zwischen den beiden Spaltflächen, so dass eine bessere Dichtwirkung als bisher bei gleichzeitig größerer Verformbarkeit der Bauteile erzielt werden kann.

Zudem ist die erfindungsgemäße Dichtungsanordnung sehr einfach zu montieren, da das Dichtelement zuerst in die größere Nut vollständig einzusetzen ist, wonach dann das andere Bauteil durch die besagte Transversalbewegung an das eine Bauteil angelegt werden kann. Dabei ist es von besonderen Vorteil, dass die Montagebewegung unabhängig von der Anwesenheit des Dichtelements ist: für den Zusammensetzvorgang der beiden Bauteile ist es unerheblich, ob das Dichtelement vorhanden ist oder nicht.

Als Hilfsmittel zum Verschieben des Dichtelements aus der größeren Nut in die kleinere Nut können beispielsweise Druckstangen zum Einsatz gelangen, welche von außen durch die Montagelöcher bis in die größere Nut reichen, um dann bei fortgesetztem Einschieben der Druckstangen die Dichtung teilweise aus der größeren Nut heraus teilweise in die kleinere Nut einzuschieben. Der Einschiebevorgang ist vorzugsweise dann beendet, wenn das Dichtelement hälftig in beiden Nuten sitzt. Anstelle von Druckstangen ist es selbstverständlich auch denkbar, dass von außen ein gasförmiges Druckmittel, beispielsweise Druckluft, den Montageöffnungen zugeführt wird, um mit dessen Hilfe das Dichtelement in die gewünschte Betriebslage zu verschieben. In diesem Fall könnte es hilfreich sein, wenn in der kleineren Nut weitere Montagelöcher münden, die analog ausgebildet sind zu denjenigen, die in der größeren Nut münden. Diese ließen sich aber auch im Kombination mit einer Druckstange zur Demontage des Dichtelements nutzen, um letzteres aus der kleineren Nut in die größere Nut zurückzuschieben. Ebenso wäre es denkbar, mit einer Zugstange, deren freies Ende sich in die Dichtelemente selbstschneidend einschraubt, diese zu demontieren. Weitere Varianten und Kombinationen der vorgenannten Verfahren sind denkbar.

Vorteilhafte Ausgestaltungen sind in den abhängigen Ansprüchen angegeben.

Selbstverständlich ist es auch möglich, dass beide Nuten derartig in ihren Abmessungen ausgestaltet sind, dass jede der Nuten das Dichtelement vollständig aufnehmen kann. In diesem Fall müssen dann nur an einer Nut die Montagelöcher vorgesehen sein. Die Druckstangen sollten dann mit einem äußeren Anschlag versehen werden, um zu vermeiden, dass während des Montageprozesses das Dichtelement zu tief in die andere der beiden Nuten eingeschoben wird. Zur Demontage werden dann Druckstangen verwendet, die das Dichtelement in die andere der beiden Nuten vollständig einschieben kann. Selbstverständlich ist es auch möglich, das eine Bauteil zu entfernen, obwohl das Dichtelement noch in beiden Nuten sitzt. In diesem Fall würde das Dichtelement durch Scherung zerstört werden.

Weiter vorteilhaft ist die Ausgestaltung, bei der die Öffnungen der Montagelöcher nach der bestimmungsgemäßen Positionierung des Dichtelements in den beiden Nuten von außen verschlossen werden, was das Auftreten von Leckage weiter reduziert. Beispielsweise könnten die Löcher ein Innengewinde aufweisen, so dass darin eine Verschlussschraube eingedreht werden kann. Am gewindeseitigen Ende der Verschlussschraube könnte des Weiteren ein Zapfen vorgesehen sein, der eine ungewollte Verschiebung des Dichtelements, beispielsweise bedingt durch Schwingungen oder Vibrationen, zudem blockiert.

Gemäß einer ersten vorteilhaften Ausgestaltung sind die einander gegenüber liegenden Nuten längs ihrer Längserstreckung gekrümmt, weiter bevorzugt kreisbogenförmig um einen gedachten Mittelpunkt, wobei der Mittelpunkt auf einer gedachten sich in einer Axialrichtung erstreckenden Mittelachse liegt, um welche die beiden Bauteile analog zur Nutkrümmung gewölbt sind. Insbesondere bei eine derartigen Anordnung ermöglicht die Erfindung eine vergleichsweise einfache Montage der durch eine Transversalbewegung anzuordnenden Bauteile.

Eine präzise Anordnung der beiden Teile zueinander lässt sich vorzugsweise dadurch erreichen, dass beide Bauteile spaltseitig eine Stufe zur Ausbildung eines überlappenden Anschlags aufweisen, an deren Auftrittsflächen sie aneinander liegen.

Vorzugsweise handelt es sich bei der Dichtungsanordnung um ein Turbinengehäuse umfassend ein erstes oberes Gehäuseteil und ein zweites oberes Gehäuseteil sowie ein unteres Gehäuseteil, wobei das erste obere Gehäuseteile als das eine der beiden Bauteile einer Dichtungsanordnung nach der vorangeschriebenen Art und das zweite obere Gehäuseteil als das andere der beiden Bauteile der Dichtungsanordnung ausgestaltet ist.

Die Begriffe "oberes" und "unteres" beziehen sich bei thermischen Strömungsmaschinen bzw. Turbinengehäuse auf die Horizontalebene. Dies ist jedoch nicht einschränkend zu verstehen, da die erfindungsgemäße Dichtungsanordnung auch bei derartigen Strömungsmaschinen eingesetzt werden kann, die beispielsweise vertikal aufgestellt sind und somit vielmehr ein linkes Gehäuseteil und rechts Gehäuseteil anstelle des unteren Gehäuseteils und des oberen Gehäuseteils aufweisen können. Gleiches gilt für die Begriffe "erstes" und "zweites" bzw. "das eines der beiden" und "das andere der beiden".

Gemäß einer weiteren vorteilhaften Ausgestaltung ist die Krümmung der Kanten der Stufen kreisbogenförmig um einen gedachten Mittelpunkt und der Mittelpunkt liegt auf einer gedachten sich in einer Axialrichtung erstreckenden Mittelachse, um welche die beiden Bauteile analog zur Kantenkrümmung gewölbt sind. Mithin können die beiden Bauteile in Form einer Rohrschale ausgestaltet sein, wobei die Rohrschale eine in Umfangsrichtung erstreckende Länge aufweist, die 180° entspricht. Dann sind die Bauteile halbrohrförmig ausgestaltet, um gemeinsam mit anderen Rohrschalen ein Turbinengehäuse ausbilden zu können. Bei einer geringen Bogenlänge erhöht sich dann die Anzahl der Teilfugen.

Die Begriffe "konvex" und "konkav" beziehen sich auf die nach außen bzw. nach innen weisenden Flächen aufgrund besagter Elemente.

Zweckmäßigerweise weisen beide Bauteile an ihrer nach außen weisenden Seite Flansche zur wechselseitigen Befestigung mittels Flanschverschraubungen auf. Hiermit kann eine vergleichsweise einfache Befestigung der beiden Bauteile aneinander herbeigeführt werden.

Insgesamt betrifft die Erfindung somit eine Dichtungsanordnung zum Abdichten eines Spalts zwischen zwei bei Raumtemperatur spaltseitig flächig aneinander liegender Bauteile, welche auch mittels einer transversalen Bewegung montierbar sind, wobei die Bauteile in ihren spaltseitigen Flächen einander gegenüberliegende Nuten aufweisen, in denen ein den Spalt verschließendes Dichtelement angeordnet ist, wobei das Dichtelement in jeder Nut an den jeweils einander gegenüberliegenden Seitenwänden der Nut vorgespannt oder eingepresst anliegt. Um eine verbesserte Dichtungsanordnung bereit zu stellen, die einerseits eine weiterhin einfache Montage mittels einer transversalen Bewegung der beiden betreffenden Bauteile zueinander und andererseits trotz eines möglichen Auseinanderklaffens der beiden Spaltflächen der Bauteile weiterhin eine besonders zuverlässige Abdichtung des zwischen den beiden Spaltflächen ggf. vorhandenen Spalts gewährleistet, ist vorgesehen, dass zumindest eine der beiden Nuten im Querschnitt betrachtet derartig in ihren Abmessungen dimensioniert ist, dass das Dichtelement vorgespannt darin vollständig versenkbar ist und dass in deren Nutgrund zumindest ein Montageloch mündet, durch welches ein durch eine der Lochmündung gegenüberliegende Öffnung einführbares Hilfsmittel zum Einschieben des Dichtelements in die andere der beiden Nuten zuführbar ist.

Beim erfindungsgemäßen Verfahren zum Montieren eines Dichtelements in einer Dichtungsanordnung ist vorgesehen, dass in einem ersten Schritt zwei Bauteile und ein Dichtelement bereitgestellt werden, in einem zweiten Schritt das Dichtelement in diejenige der beiden Nuten versenkt wird, welche das Dichtelement vollständig aufnehmen kann, in einem dritten Schritt die beiden Bauteile in ihre endgültige Position bewegt werden und dass anschließend in einen vierten Schritt das Dichtelement mit einem Hilfsmittel aus der einen Nut teilweise heraus in die andere Nut teilweise hinein eingeschoben wird.

Weitere Vorteile und Merkmale der Erfindung werden anhand weiterer Ausführungsbeispiele näher angegeben. Es zeigen:
- Figur 1: ein Gasturbinengehäuse in einer Seitenansicht mit zwei spaltseitig flächig aneinander liegenden Gehäuseteilen,
- Figur 2: einen Querschnitt durch das Gehäuse aus Figur 1 als Seitenansicht eines ersten Bauteils einer erfindungsgemäßen Dichtungsanordnung,
- Figuren 3-5: das Detail X aus Figur 1 als schrittweises Zusammensehen des ersten Gehäuseteils mit dem zweiten Gehäuseteil und dem Verschieben des Dichtelementes, und
- Figur 6: eine Schnittdarstellung durch beide Gehäuseteile mit dem endgültig positionierten Dichtelement.

In allen Figuren sind identische Merkmale mit den gleichen Bezugszeichen versehen.

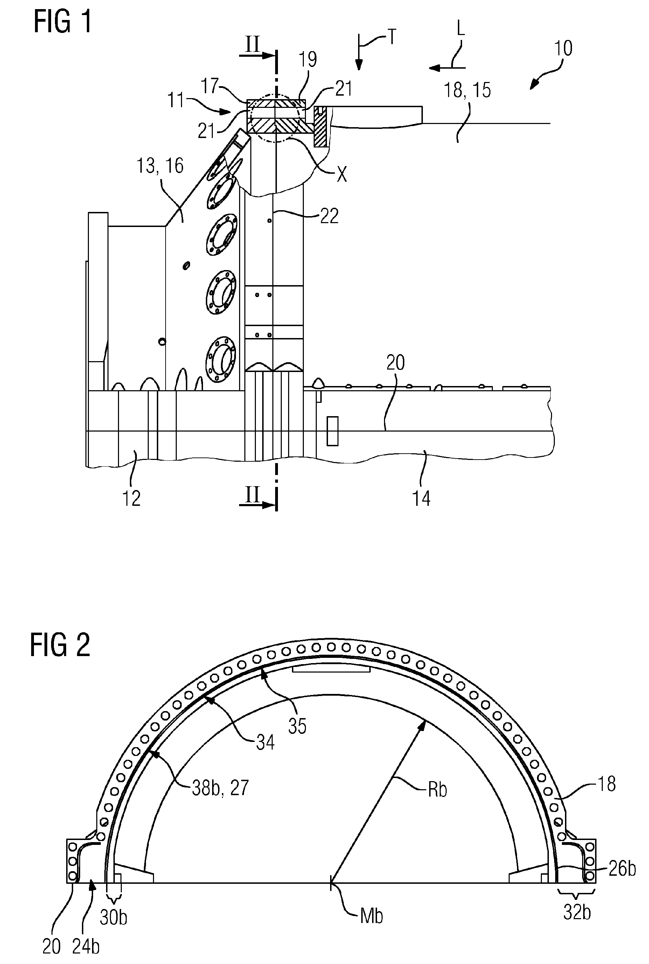

Die Figur 1 zeigt in einer Seitenansicht einen Ausschnitt auf das Gehäuse 10 einer stationären Gasturbine. Das Gehäuse 10 umfasst im dargestellten Ausführungsbeispiel ein erstes unteres Gehäuseteil 12, ein zweites unteres Gehäuseteil 14, ein erstes oberes Gehäuseteil 16 und ein zweites oberes Gehäuseteil 18. Jedes der Gehäuseteile 12, 14, 16, 18 ist halbrohrförmig ausgestaltet, so dass zwischen den beiden unteren Gehäuseteile 12, 14 und den beiden oberen Gehäuseteilen 16, 18 sich eine horizontale Teilfuge 20 ausbildet. In der horizontalen Teilfuge 20 liegen bei Raumtemperatur die jeweiligen Gehäuseteile mit ihren Spaltflächen flächig aneinander. Oberhalb der horizontalen Teilfuge 20 liegen das erste obere Gehäuseteil 16 und das zweite oberer Gehäuseteil 18 in einer vertikalen Teilfuge 22 spaltseitig aneinander. Im gezeigten Ausführungsbeispiel erstreckt sich die vertikale Teilfuge 22 nach unten über die horizontale Teilfuge 20 hinaus, so dass das erste untere Gehäuseteil 12 und das zweite untere Gehäuseteil 14 spaltseitig flächig aneinander liegen. Im Sinne dieser Anmeldung sind diejenigen Flächen der Gehäuseteile 12, 14, 16, 18, die den jeweils gegenüberliegenden Bauteilen zugewandt sind, spaltseitig an dem betreffenden Bauteil angeordnet.

Die Gehäuseteile 16, 18 weisen im Bereich der vertikalen Teilfuge angeordnete Flansche 17, 19 auf, in denen Bohrungen 21 angeordnet sind. In diesen Bohrungen 21 sitzen nicht dargestellte Dehnschrauben, die die beiden Gehäuseteile 16, 18 spaltseitig fest aneinander pressen.

Die Erfindung wird nachfolgend anhand der beiden oberen Gehäuseteile 16, 18 näher erläutert, wobei das erste obere Gehäuseteil 16 das eine (13) der beiden Bauteile 13, 15 einer erfindungsgemäßen Dichtungsanordnung 11 darstellt und das zweite obere Gehäuseteil 18 das andere (15) der beiden Bauteile 13, 15 einer erfindungsgemäßen Dichtungsanordnung.

Da beide oberen Gehäuseteile 16, 18 zum Teil identischen Merkmale aufweisen, erhalten die Bezugszeichen dieser Merkmale in der nachfolgenden Figurenbeschreibung die Suffixe "a" bzw. "b". Den betreffenden Bezugszeichen wird das Suffix "a" zur Kennzeichnung besagter Merkmale des ersten oberen Gehäuseteils 16 hinzugefügt und das Suffix "b" zur Kennzeichnung der Merkmale des zweiten oberen Gehäuseteils 18. Werden die betreffenden Bezugszeichen ohne Suffix verwendet, so sind darunter die Merkmale beider Gehäuseteile 16, 18 verstanden.

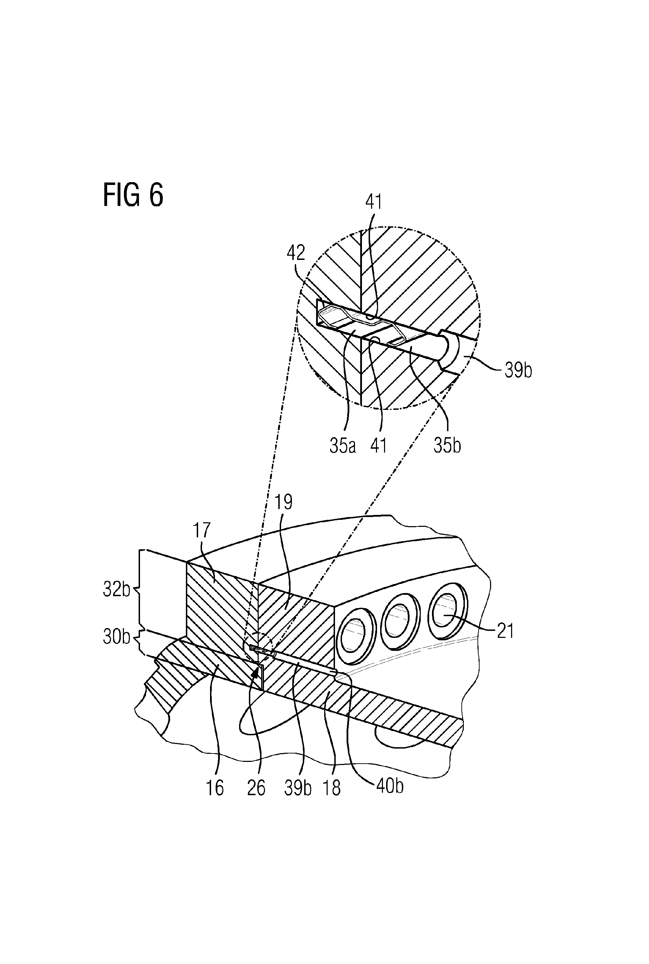

Figur 2 zeigt den Schnitt entlang der Schnittlinie II-II aus Figur 1, wobei die Schnittlinie mit der vertikalen Teilfuge 22 zusammenfällt, so dass Figur 2 gleichzeitig eine Seitenansicht des zweiten oberen Gehäuseteils 18 darstellt. Das zweite obere Gehäuseteil 16 erstreckt sich um einen gedachten Mittelpunkt Mb mit konstantem Radius Rb über eine Bogenlänge von 180°. In einer dem Betrachter der Figur 2 zugewandten Spaltseite 24b des zweiten oberen Gehäuseteils 18 ist eine Stufe 26b angeordnet. Die Stufe 26b ist dergestalt, dass - wie Figur 6 zeigt - der in Bezug zur Stufe 26b radial weiter innen liegende Teil 30b der Spaltfläche zurückgesetzt ist gegenüber des radial außerhalb liegenden Teils 32b der Spaltfläche. Eine Auftrittfläche 38b der Stufe 26b weist somit zum Mittelpunkt Mb.

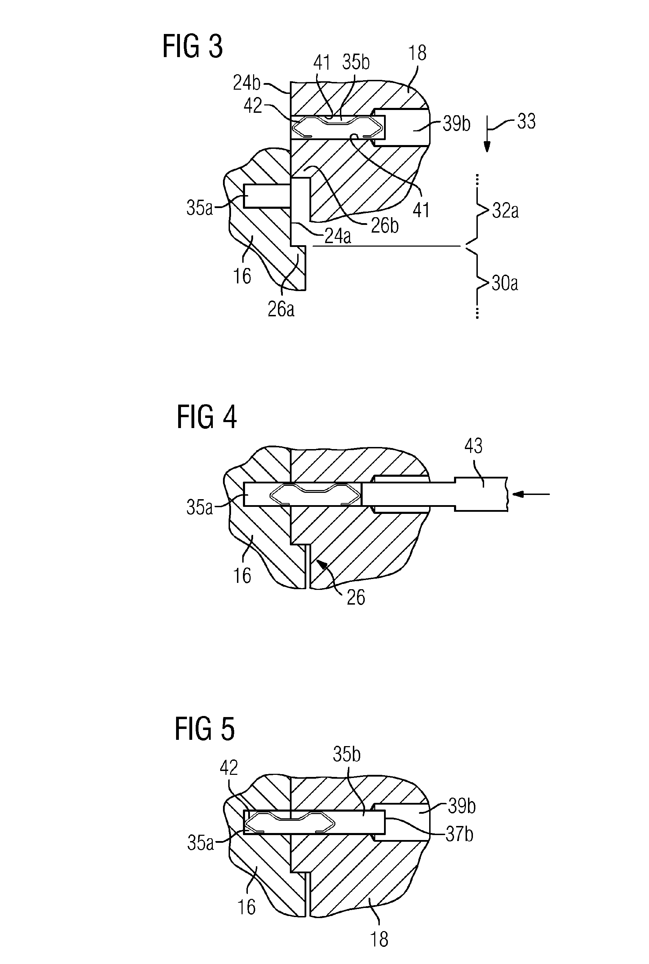

Figur 3 zeigt einen Querschnitt durch das Detail X aus Figur 1. Das erste obere Gehäuseteil 16 ist in Figur 3 links in seiner endgültigen Betriebslage dargestellt, wohingegen das zweite obere Gehäuseteil 18 noch in einer Montageposition dargestellt ist, kurz bevor es seine endgültige Betriebsposition erreicht. Der Pfeil 33 stellt die Bewegungsrichtung des zweiten oberen Gehäuseteils 18 gegenüber dem ersten oberen Gehäuseteil 16 dar, welche transversal zu der Ebene der Spaltfläche ist. Das zweite obere Gehäuseteil 18 umfasst besagte Spaltseite 24b, das erste obere Gehäuseteil umfasst die Spaltseite 24a.

In der radial weiter außen liegenden Teilfläche 32b ist eine erste Nut 35b angeordnet. In dieser sitzt vollständig versenkt ein Dichtelement 42, d.h. dass das Dichtelement 42 ragt nicht aus der Nutöffnung der ersten Nut 35b heraus. Im Nutgrund 37b der Nut 35b münden mehrere, im Flansch 19 angeordnete Montagelöcher 39b, von denen jedoch nur eines gezeigt ist. Da die Nut 35b längs ihrer Erstreckung analog zu der Stufe 26b und dem Bauteil 16 gekrümmt ist und sich mithin über einen Halbkreis erstreckt, liegen die Montagelöcher 39b auf der 10Uhr, 12Uhr und 14Uhr Position. Andere Positionen und andere Anzahlen von Montagelöchern sind denkbar. Die Montagelöcher 39b weisen eine von außen am Flansch 19 zugängliche Öffnung 41 (FIG 6) auf, wobei jede Öffnung 41 mit der Mündung der Montagelöcher 39b und der Nutöffnung fluchtet.

Das Dichtelement 42 umfasst zwei jeweils c-förmige Enden, die jeweils federn an beiden Seitenwänden 41 der erste Nut 35b vorgespannt anliegen. Das Dichtelement 42 könnte anstelle des gezeigten Ausführungsbeispiels auch als so genannte "Dog-Bone"-Dichtung ausgestaltet sein.

Das erste obere Gehäuseteil 16 umfasst ebenfalls eine Spaltseite 24a und eine Stufe 26a, welche die Spaltseite 24a in eine radial äußere Teilfläche 32a sowie in eine radial innere Teilfläche 30a unterteilt. Beim ersten oberen Gehäuseteil 16 ist jedoch die radial äußere Teilfläche 33 gegenüber der radial inneren Teilfläche 30a zurückversetzt.

Jede Stufe 26 weist eine Auftrittsfläche 38 auf. Weiter ist in der äußeren Teilfläche 32a des ersten oberen Gehäuseteils 16 eine zweite Nut 35a vorgesehen, welche ebenso wie die Kante 27a der Stufe 26 kreisbogenförmig gekrümmt ist. Die zweite Nut 35a ist vorzugsweise mit geringem Abstand zur Stufe angeordnet. Sie könnte aber auch mit der Stufe fluchten, so dass deren konvexe Seitenwand auf gleichem Radius wie die konvexe Antrittsfläche 38a der Stufe 26a. Während des Absetzvorgangs des zweiten oberen Gehäuseteils 14 ist die zweite Nut 35a leer.

Figur 4 zeigt das zweite obere Gehäuseteil 18 in seiner endgültigen Betriebslage, nachdem es auf dem unteren Gehäuseteil 14 absetzt wurde. Dabei liegen die Stufen 26 als Anschlag flächig aneinander, ebenso wie die radial äußeren Teilflächen 32. Gleichzeitig liegen die Nuten 35 einander gegenüber. Anschließend ist das Dichtelement 42 aus der ersten Nut 35b herauszuschieben und gleichzeitig in die zweite Nut 35a einzuschieben, um die Herstellung der Dichtungsanordnung abzuschließen.

Zur Dichtelementverschiebung stehen mehrere Hilfsmittel zur Verfügung. Ein erstes Hilfsmittel ist eine einfache Druckstange 43, die von außen in das Montageloch eingesteckt wird und dann so weit eingeschoben wird, bis die Druckstange das Dichtelement in die erste Nut 35a eingeschoben hat. Ein anderes Hilfsmittel könnte auch Druckluft sein, welches von außen dem Montageloch zugeführt wird, um mit Hilfe des Druckgefälles das Dichtelement zu verschieben (FIG 5).

Die Demontage kann in analoger Weise erfolgen, wenn im Nutgrund der zweite Nut 35a ebenso gestaltete Löcher münden. Diese sind jedoch im Ausführungsbeispiel nicht gezeigt.

Wenn bei der Dichtungsanordnung aufgrund thermischer Dehnungen die radial außerhalb der Stufe 26 liegenden Teilflächen 30 des ersten oberen Gehäuseteils 16 und des zweiten oberen Gehäuseteils 18 auseinanderklaffen und damit einen Strömungsweg für eine Leckage öffnen, bleibt weiterhin der sich so bildende Spalt verschlossen, da weiterhin die beiden Enden des Dichtelements 42 an jeder Seitenwand 41 der betreffenden Nut 35a, 35b dichtend anliegen.

Aus Gründen der Symmetrie bietet es sich an, dass die erfindungsgemäße Dichtungsanordnung 11 nicht nur in der oberen Hälfte des Gehäuses 10 der Gasturbine angewendet wird, sondern auch bei den unteren Gehäuseteilen 12, 14. Nichtsdestotrotz besteht aber auch die Möglichkeit, dass die unteren Gehäuseteile 12, 14 nicht modular ausgestaltet sind, sondern einstückig.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen. Insbesondere lassen sich die Merkmale unterschiedlicher Ausführungsbeispiele miteinander kombinieren.

## Patentansprüche

1. Dichtungsanordnung (11) zum Abdichtung eines Spalts zwischen zwei bei Raumtemperatur spaltseitig flächig aneinander liegender Bauteile (13, 15), die jeweils in ihren spaltseitigen Flächen (30) einander gegenüberliegende Nuten (35) aufweisen, in denen ein den Spalt verschließendes Dichtelement (42) angeordnet ist,
wobei das Dichtelement (42) in jeder Nut (35) an den jeweils einander gegenüberliegenden Seitenwänden (41) der Nut (35) anliegt,
**dadurch gekennzeichnet,**
**dass** zumindest eine der beiden Nuten (35b) im Querschnitt betrachtet derartig in ihren Abmessungen dimensioniert ist, dass das Dichtelement (42) darin vollständig versenkbar ist und dass in deren Nutgrund (37b) zumindest ein Montageloch (39b) mündet, durch welches ein durch eine der Lochmündung gegenüberliegende Öffnung (40b) einführbares Hilfsmittel zum Einschieben des Dichtelements (42) in die andere der beiden Nuten (34a) zuführbar ist.

2. Dichtungsanordnung (11) nach Anspruch 1,
bei der die Nuten (35) längs ihrer Erstreckung gekrümmt sind.

3. Dichtungsanordnung (11) nach Anspruch 2,
bei der die Krümmung kreisbogenförmig um einen gedachten Mittelpunkt (M) ist und wobei der Mittelpunkt (M) auf einer gedachten sich in einer Axialrichtung erstreckenden Mittelachse liegt, um welche die beiden Bauteile (13, 15) analog zur Nutkrümmung gewölbt sind.

4. Dichtungsanordnung (11) nach Anspruch 1, 2 oder 3, wobei jedes Bauteil (13, 15) spaltseitig eine Stufe (26) zur Bildung eines überlappenden Anschlags aufweist und die Stufen (26) längs ihrer Kanten (27) gekrümmt sind.

5. Dichtungsanordnung (11) nach Anspruch 3 oder 4,
bei der die beiden Bauteile (13, 15) sich in Umfangsrichtung des Kreisbogens über eine Länge von 180° erstrecken.

6. Dichtungsanordnung (11) nach einem der Ansprüche 1 bis 5,
bei der beide Bauteile (13, 15) Flansche (17, 19) aufweisen zur wechselseitigen Befestigung mittels Flanschverschraubungen und dass die Öffnung (40) der betreffenden Montagelöcher (39) in einer nach außen weisenden Fläche des Flansches (17, 19) mündet.

7. Dichtungsanordnung (11) nach einem der Ansprüche 1 bis 6,
bei der zum Herausschieben des Dichtelements (42) aus der anderen (35a) der beiden Nuten (35) weitere Montagelöcher vorgesehen sind, welche im Nutgrund (37a) der anderen Nut (35a) münden.

8. Turbinengehäuse (10) umfassend ein erstes, oberes Gehäuseteil (16) und ein zweites, oberes Gehäuseteil (18) sowie ein unteres Gehäuseteil,
mit einer Dichtungsanordnung (11) nach einem der vorangehenden Ansprüche,
wobei die beiden oberen Gehäuseteile (16, 18) jeweils als eines der beiden Bauteile (13, 15) der Dichtungsanordnung (11) ausgestaltet sind.

9. Turbinengehäuse (10) nach Anspruch 8,
bei der das untere Gehäuseteil ein erstes Gehäuseteil (12) und ein zweites Gehäuseteil (14) umfasst,
wobei diese gemäß der beiden Bauteile (13, 15) der Dichtungsanordnung (11) nach einem der Ansprüche 1 bis 7 ausgestaltet sind.

10. Verfahren zum Montieren eines Dichtelements (42) in einer Dichtungsanordnung (11),
bei dem in einem ersten Schritt zwei Bauteile (13, 15) und ein Dichtelement (42) gemäß den Merkmalen eines der Ansprüche 1 bis 7 bereitgestellt werden,
bei dem in einem zweiten Schritt das Dichtelement (42) in derjenigen der beiden Nuten (35) versenkt wird, welche das Dichtelement (42) vollständig aufnehmen kann,
bei dem in einem dritten Schritt die beiden Bauteile (13, 15) in ihre endgültige Position bewegt werden und
dass anschließend in einen vierten Schritt das Dichtelement (42) mit einem Hilfsmittel aus der einen Nut (35b) teilweise heraus teilweise in die andere Nut (35a) hinein eingeschoben wird.

11. Verfahren nach Anspruch 10,
bei dem das Hilfsmittel als eine Druckstange oder als ein gasförmiges Druckmittel ausgestaltet ist, welches durch das Montageloch (39) der einen Nut (35b) eingesetzt wird.

12. Verfahren nach Anspruch 10 oder 11, durchgeführt mit einer Dichtungsanordnung (11) ausgebildet als ein Turbinengehäuse nach einem der Ansprüche 8 bis 9.

13. Verfahren zum Demontieren eines Dichtelements (42) einer Dichtungsanordnung (11) gemäß einer der Ansprüche 1 bis 6, bei dem das Hilfsmittel eine Zugstange ist, mittels der das Dichtelement (42) in die betreffende Nut eingezogen wird.

14. Verfahren nach Anspruch 12,
bei dem an der Öffnung (40) ein Unterdruck erzeugt wird, um das Dichtelement (42) in die Nut (35b) einzusaugen.

15. Verfahren zum Demontieren eines Dichtelements (42) einer Dichtungsanordnung (11) gemäß Anspruch 7,
bei dem das Hilfsmittel als eine Druckstange oder als ein gasförmiges Druckmittel ausgestaltet ist, welches durch das Montageloch (39) der anderen Nut (35a) eingesetzt wird.
